# EUROPÄISCHE PATENTSCHRIFT

(11) **EP 2 364 961 B1**
(45) Veröffentlichungstag und Bekanntmachung des Hinweises auf die Patenterteilung: **05.06.2019**
(21) Anmeldenummer: 11152866.7
(22) Anmeldetag: 01.02.2011
(51) Int. Cl.: C04B 28/02, C04B 40/06

(54) **Zweikomponenten-Mörtelmasse und deren Verwendung**
Dual component mortar composition and its use
Masse de mortier à deux composants et son utilisation

(30) Priorität: 24.02.2010 DE 102010008971
(43) Veröffentlichungstag der Anmeldung: 14.09.2011
(73) Patentinhaber: HILTI Aktiengesellschaft, 9494 Schaan (LI)
(72) Erfinder: Wieland, Philipp, 80935, München (DE)
(74) Vertreter: Hilti Aktiengesellschaft Corporate Intellectual Property

(56) Entgegenhaltungen:
- EP-A1- 0 432 087
- EP-A2- 0 338 983
- EP-A2- 0 431 302
- WO-A1-93/01246
- WO-A1-94/19397

## Beschreibung

Gegenstand der Erfindung ist eine Zweikomponenten-Mörtelmasse mit einer härtbaren Harzkomponente (A), die 30 bis 45 Gcw.-% mindestens eines radikalisch polymerisierbaren Harzes, 30 bis 45 Gew.-% Füllstoffe, 15 bis 25 Gew.-% Zement und 1 bis 8 Gew.-% Verdickungsmittel enthält, und einer davon reaktionsinhibierend getrennt angeordneten Härterkomponente (B), die 1 bis 20 Gew.-% eines Peroxids, 10 bis 35 Gew.-% Wasser, 40 bis 80 Gew.-% Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, und deren Verwendung zur Befestigung von Verankerungsmitteln in Bohrlöchern in mineralischen Untergründen durch chemische Reaktion der Harzkomponente (A) mit der Härterkomponente (B).

Die Harzkomponenten von Zweikomponenten-Mörtelmassen, die auch als chemische Dübelmassen bezeichnet werden, bestehen in der Regel aus einer organischen Harzmatrix, also einer härtbaren Harzkomponente und einer davon reaktionsinhibierend getrennt angeordneten Härterkomponente. Die Harzkomponente enthält neben dem mindestens einen radikalisch polymerisierbaren Harz üblicherweise anorganische Füllstoffe, wie Sand, Zement, Verdickungsmittel und dergleichen. Sowohl aus Kostengründen als auch aus Gründen der Leistungssteigerung ist es dabei oft wünschenswert, einen möglichst hohen Füllgrad der organischen Matrix, also einen hohen Füllstoffgehalt in der Harzkomponente zu erreichen. Ein sich dabei ergebendes Problem besteht darin, dass im allgemeinen mit höherem Füllgrad der Harzkomponente die Auspresskraft der fertigen Mörtelmasse stark ansteigt, was Schwierigkeiten für den Anwender (schnelle Ermüdung bei Handbetrieb des Auspressgeräts) als auch für die verwendeten Auspressgeräte (reduzierte Lebensdauer durch erhöhte Kräfte) verursacht.

Herkömmliche Methoden zur Verringerung der Auspresskräfte bei gegebenem Füllgrad einer Harzkomponente bestehen beispielsweise in einer Verringerung des Verdickeranteils oder darin, gezielt Luftbläschen definierter Größe und Verteilung in die Harzkomponente einzubringen (siehe WO 2008/058588).

Eine Verringerung des Verdickeranteils der Harzkomponente führt allerdings häufig zu einer starken Erniedrigung der Gesamtviskosität, was wiederum zu Problemen bei der Anwendung der Mörtelmasse führen kann, namentlich bei Überkopfanwendung. Das gezielte Einbringen von Luftbläschen in die Harzkomponente kann wiederum die Verbundtragfähigkeit der Produkte verringern, da die Druckfestigkeit des durch die Aushärtung entstehenden Verbundwerkstoffes herabgesetzt werden kann.

Das Dokument WO 93/01246 beschäftigt sich mit der Erzeugung von Kunstharzkörpern, die einen niedrigen Volumenschwund beim Aushärten und eine geringe Wasseraufnahme aufweisen und gleichzeitig eine gute chemische Beständigkeit haben.

Die Aufgabe der vorliegenden Erfindung besteht nun darin, die Auspresskräfte von hochgefüllten Zweikomponenten-Mörtelmassen zu senken, ohne dabei die genannten Nachteile des Standes der Technik in Kauf nehmen zu müssen.

Es hat sich nun überraschenderweise gezeigt, dass diese Aufgabe dadurch gelöst werden kann, dass der Harzkomponente der Zweikomponenten-Mörtelmasse geringe Mengen einer anorganischen und/oder organischen Säure und/oder Salzen davon zugesetzt wird.

Die Erfindung betrifft daher die Zweikomponenten-Mörtelmasse gemäß Anspruch 1. Die Unteransprüche betreffen bevorzugte Ausführungsformen dieses Erfindungsgegenstandes sowie die Verwendung der genannten Zweikomponenten-Mörtelmasse zur Befestigung von Verankerungsmitteln, wie Ankerstangen und dergleichen, in Bohrlöchern in mineralischen Untergründen, wie Beton, Ziegelwerk oder Naturstein durch chemische Reaktion der Harzkomponente mit der Härterkomponente.

Die Erfindung betrifft somit eine Zweikomponenten-Mörtelmasse mit einer härtbaren Harzkomponente (A), die 30 bis 45 Gew.-% mindestens eines radikalisch polymerisierbaren Harzes, 30 bis 45 Gew.-% Füllstoffe, 15 bis 25 Gew.-% Zement und 1 bis 8 Gew.-% Verdickungsmittel enthält, und einer davon reaktionsinhibierend getrennt angeordneten Härterkomponente (B), die 1 bis 20 Gew.-% eines Peroxids, 10 bis 35 Gew.-% Wasser, 40 bis 80 Gew.-% Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, die dadurch gekennzeichnet ist, dass die Harzkomponente (A) 0,01 bis 5 Gew.-% einer anorganischen und/oder organischen Säure und/oder deren Salze enthält.

Vorzugsweise enthält die Harzkomponente (A) als anorganische Säure eine anorganische Lewissäure, vorzugsweise eine Verbindung ausgewählt aus der Phosphorsäure (H₃PO₄), ein primäres Phosphat der Formel M^{I}H₂PO₄, ein sekundäres Phosphat der Formel M^{I}₂HPO₄, eine Oligophosphorsäure der Formel M^{I}ₙ₊₂PₙO₃ₙ₊₁ bzw. M^{I}nH₂PₙO₃ₙ₊₁, worin n einen Wert von 2 bis 10 aufweist; eine Polyphosphorsäure der Formel M^{I}ₙ₊₂PₙO₃ₙ₊₁ bzw. M^{I}ₙH₂PₙO₃ₙ₊₁, worin n einen Wert von > 10 aufweist, phosphorige Säure (H₃PO₃), ein primäres Phosphonat der Formel M^{I}H₂PO₃, ein sekundäres Phosphonat der Formel M^{I}₂HPO₃, worin M^{I} für ein einwertiges Metalläquivalent steht, Verbindungen der Formel Si(OH)₄, Al(OH)₃, H₃BO₃, H₃AsO₃, As₂O₃, H₃SbO₃, H₃SbO₄, Sb₂O₃, FeCl₃, CuCl₂ und ZnCl₂ und Mischungen davon umfassenden Gruppe. Als einwertiges Metalläquivalent M^{I} sind vorzugsweise einwertige Metalläquivalente der Alkali- und Erdalkalimetalle, wie Lithium, Natrium, Kalium, Magnesium und Calcium bevorzugt.

Gemäß einer bevorzugten Ausführungsform enthält die erfindungsgemäße Zweikomponenten-Mörtelmasse in der Harzkomponente (A) als organische Säure eine Verbindung ausgewählt aus der aliphatische und aromatische Carbonsäuren, organische aliphatische und aromatische Phosphorsäuren, organische aliphatische und aromatische Phosphonsäuren, organische aliphatische und aromatische Sulfonsäuren und deren Salze umfassenden Gruppe.

Besonders bevorzugt sind als aliphatische und/oder aromatische Carbonsäuren Ameisensäure, Essigsäure, Propionsäure, Oxalsäure, Malonsäure, Bernsteinsaure, Milchsäure, Brenztraubensäure, Citronensäure, Fumarsäure, Maleinsäure, Benzoesäure, Salicylsäure, Phthalsäure, Terephthalsäure sowie deren Salze, als aliphatische Phosphonsäuren Vinylphosphonsäure sowie deren Salze und als aliphatische und aromatische Sulfonsäuren Methansulfonsäure, Benzolsulfonsäure, p-Toluolsulfonsäure, Sulfanylsäure sowie deren Salze.

Als Salze der genannten Säuren sind insbesondere die Alkalimetall- und Erdalkalimetallsalze bevorzugt, namentlich die Lithium-, Natrium-, Kalium-, Magnesium- und Calciumsalze.

Vorzugsweise enthält die Harzkomponente (A) die anorganische und/oder organische Säure und/oder deren Salze in einer Menge von 0,01 bis 2,0 Gew.-%, noch bevorzugter in einer Menge von 0,05 bis 1,0 Gew.-%.

Mit Vorteil enthält die Harzkomponente (A) der erfindungsgemäßen Zweikomponenten-Mörtelmasse als radikalisch polymerisierbares Harz mindestens einen Vertreter der ungesättigte Polyesterharze, Vinylesterharze und Vinylesterurethanharze umfassenden Gruppe. Dabei ist als Vinylesterharz ein Additionsprodukt von Polyepoxiden mit ungesättigten Monocarbonsäuren, vorzugsweise ein Vinylesterharz auf Basis von Bisphenol A, ein Vinylesterharz aus einem Epoxy-Novolakharz und (Meth)acrylsäure oder ein Veresterungsprodukt von gegebenenfalls alkoxyliertem Bisphenol A mit (Meth)acrylsäure; als Vinylesterurethanharz ein Urethanmethacrylatharz oder ein Urethandimethacrylatharz; und als ungesättigtes Polyesterharz ein ungesättigtes Polyesterharz auf Basis von o- und/oder iso-Phthalsäure, Maleinsäure oder Fumarsäure als Dicarbonsäure und niedrigmolekularen aliphatischen Polyolen, vorzugsweise Diolen, bevorzugt.

Die erfindungsgemäße Zweikomponenten-Mörtelmasse kann gemäß einer weiter bevorzugten Ausführungsform in der Harzkomponente (A) 0 bis 1 Gew.-% eines Polymerisationsinhibitors enthalten, beispielsweise einen phenolischen oder frei-radikalischen Polymerisationsinhibitor, vorzugsweise 4-Hydroxy-3,5-ditert.- butyltoluol, Butylbrenzcatechin, Hydrochinon und/oder 2,2,6,6-Tetramethylpiperidinyl-1-oxid oder dessen Derivate.

Gemäß einer weiter bevorzugten Ausführungsform enthält die erfindungsgemäße Zweikomponenten-Mörtelmasse in der Harzkomponente (A) 0,1 bis 30 Gew.-% eines Beschleunigers, wobei als Beschleuniger tertiäre aromatische Amine, Toluidine oder Xylidine bevorzugt sind. Besonders bevorzugte Beschleuniger sind N,N-Dimethylanilin, N,N-Diethylanilin, N,N-Diemethyl-p-toluidin, N,N-Bis(hydroxyethyl)-p-toluidin, N,N-Bis(hydroxypropyl)-p-toluidin, N,N-Bis(hydroxyethyl)-m-toluidin und/oder N-Bis(2-hydroxyethyl)-xylidin.

Vorzugsweise enthält die Härterkomponente (B) der Zweikomponenten-Mörtelmasse 1 bis 20 Gew.-% eines Peroxids, 10 bis 35 Gew.-% Wasser, 40 bis 80 Gew.-% Füllstoffe und 0,5 bis 5 Gew.-% Verdickungsmittel.

Das Peroxid ist in der Härterkomponente (B) vorzugsweise in einer Menge von 0,5 bis 10 Gew.-%, vorzugsweise von 3 bis 8 Gew.-%, bezogen auf das radikalisch polymerisierbare Harz, enthalten.

Gemäß einer vorteilhaften Ausführungsform der Erfindung enthält die Härterkomponente (B) der erfindungsgemäßen Zweikomponenten-Mörtelmasse als Peroxid Dibenzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat.

Eine besonders bevorzugte Härterkomponente (B) der erfindungsgemäßen Zweikomponenten-Mörtelmasse enthält 30 bis 40 Gew.-% einer wässrigen Dispersion von Benzoylperoxid, 40 bis 80 Gew.-% Quarzmehl, 15 bis 25 Gew.-% Aluminiumoxid und 0,1 bis 3 Gew.-% pyrogene Kieselsäure.

Sowohl die Harzkomponente (A) als auch die Härterkomponente (B) der erfindungsgemäßen Zweikomponenten-Mörtelmasse können als Füllstoff Quarz, pyrogene Kieselsäure, Glas, Silikate, Aluminosilikate, Aluminiumoxid, Korund, Porzellan, Steingut, Schwerspat, Leichtspat, Talkum und/oder Kreise enthalten, wobei diese Füllstoffe in einer für die erfindungsgemäße Anwendung geeignete Teilchengröße, die dem Fachmann ohne weiteres bekannt ist, aufweisen.

Die Harzkomponente (A) und/oder die Härterkomponente (B) der erfindungsgemäßen Zweikomponenten-Mörtelmasse können als Verdickungsmittel Schichtsilikate, wie Bentonit oder Smektit, pyrogene Kieselsäure und/oder organische Substanzen, wie Amidwachse, Harnstoffderivate oder Rizinusölderivate enthalten.

Die erfindungsgemäße Zweikomponenten-Mörtelmasse umfasst die härtbare Harzkomponente (A) und die Härterkomponente (B) reaktionsinhibierend voneinander getrennt in unterschiedlichen Behältern, beispielsweise einer Mehrkammervorrichtung, wie eine Mehrkammerpatrone und/oder -kartusche, aus welchen Behältern die beiden Komponenten durch Einwirkung mechanischer Presskräfte oder unter Einwirkung eines Gasdrucks ausgepresst und vermischt werden. Bevorzugt sind Patronensysteme oder Injektionssysteme, bei denen die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden. Bei dieser Anwendung der erfindungsgemäßen Zweikomponenten-Mörtelmasse macht sich die erfindungsgemäß erreichte Verringerung der Auspresskräfte besonders vorteilhaft bemerkbar.

Es hat sich gezeigt, dass die erfindungsgemäße Zweikomponenten-Mörtelmasse aufgrund der Anwesenheit der anorganischen und/oder organischen Säure bzw. deren Salze in der Harzkomponente (A) im Vergleich zu der gleichen Mörtelmasse ohne anorganische oder organische Säure in der Harzkomponente (A) deutlich geringere Auspresskräfte beim Auspressen aus den die Mischung enthaltenden Behältern erfordert, ohne dass dabei die Viskosität der Mörtelmasse erniedrigt wird. In dieser Weise können Probleme, beispielsweise bei Überkopfanwendungen, ausgeschlossen werden. Des weiteren wird das Einbringen von Luft vermieden, was, wie bereits ausgeführt, zu einer Verringerung der Verbundtragfähigkeit der ausgehärteten Mörtelmasse zur Folge haben kann.

Gegenstand der Erfindung ist daher auch die Verwendung der erfindungsgemäßen Zweikomponenten-Mörtelmasse zur Befestigung von Verankerungsmitteln, wie Ankerstangen, Dübeln und Schrauben in Bohrlöchern unterschiedlichen mineralischen Untergrunds, also beispielsweise Untergründen auf der Grundlage von Beton, Porenbeton, Ziegelwerk, Kalksandstein, Sandstein, Naturstein oder dergleichen, durch chemische Reaktion der Harzkomponente (A) mit der Härterkomponente (B).

Das folgende Beispiel dient der Erläuterung der Erfindung, ohne sie jedoch in irgendeiner Weise einzuschränken.

### Beispiel

Aus den in der nachfolgenden Tabelle angegebenen Bestandteilen wurden die Harzkomponente (A) für die Vergleichsmasse 1 und die erfindungsgemäßen Massen 2 und 3 hergestellt. In gleicher Weise wurden die aus den in der Tabelle angegebenen Bestandteilen die Härterkomponente (B) hergestellt, die für sämtliche Massen gleich war.

Die Harzkomponente (A) und die Härterkomponente (B) wurden in passende Hartkartuschen abgefüllt und diese mit einem Statikmischer versehen. Anschließend wurde die Kraft gemessen, die benötigt wird, um die beiden Komponenten bei Raumtemperatur mit konstantem Vorschub durch den Statikmischer auszupressen. Dabei wurden die Auspresskräfte auf einer Zwick-Zugprüfmaschine gemessen.

Weiterhin wurde die Viskosität der erhaltenen Mörtelmassen bestimmt.

Schließlich wurden die Festigkeitseigenschaften der ausgehärteten Massen durch Messung der Scherfestigkeit überprüft. Hierzu wird die in einem Statikmischer gemischte Mörtelmasse, bestehend aus der Harzkomponente (A) und der Härterkomponente (B) in eine Stahlhülse mit 10 mm Innengewinde eingebracht. In die nicht ausgehärtete Mörtelmasse wird eine Gewindestange der Größe M8 eingeführt und zentrisch fixiert. Nach der Aushärtung der Mörtelmasse wird mit Hilfe einer Zwick-Zugprüfmaschine die Kraft gemessen, die zum Herausziehen der Ankerstange aus der Innengewindehülse notwendig ist und daraus die Scherfestigkeit in N/mm² errechnet.

Die bezüglich der Auspresskraft, der Viskosität und der Scherfestigkeit erhaltenen Zahlenwerte sind ebenfalls in der nachfolgenden Tabelle angegeben.

| **Tabelle** | | | |
|---|---|---|---|
| | | | |

| **Harzkomponente (A)** | **Masse 1** (Vergleich) | **Masse 2** | **Masse 3** |
|---|---|---|---|
| Urethanmethacrylatharz (Gew.-%) | 38,0 | 38,0 | 38,0 |
| Quarzsand (Gew.-%) | 40,0 | 39,9 | 39,7 |
| Zement (Gew.-%) | 19,0 | 19,0 | 19,0 |
| Pyrogene Kieselsäure (Gew.-%) | 3,0 | 3,0 | 3,0 |
| Borsäure (Gew.-%) | - | 0,1 | 0,3 |
| | | | |

| **Härterkomponente (B**) | | | |
|---|---|---|---|
| Benzoylperoxid, wässrige Suspension (Gew.-%) | 35,0 | 35,0 | 35,0 |
| Quarzmehl (Gew.-%) | 44,0 | 44,0 | 44,0 |
| Aluminiumoxid (Gew.-%) | 20,0 | 20,0 | 20,0 |
| Pyrogene Kieselsäure (Gew.-%) | 1,0 | 1,0 | 1,0 |
| | | | |
| Auspresskraft [N] | 1100 | 1000 | 900 |
| Viskosität [Pas] | 50 | 65 | 60 |
| Scherfestigkeit [N/mm²] | 24 | 28 | 27 |
| | | | |

Wie aus der obigen Tabelle zu erkennen ist, zeigt sich, dass durch den erfindungsgemäßen Zusatz von Borsäure die Auspresskraft der Mörtelmasse bei ansonsten gleicher Zusammensetzung der Masse gesenkt werden kann. Die Auspresskraft ist dabei umgekehrt proportional zur zugesetzten Menge an Borsäure.

Die Viskosität der Harzkomponente wird durch den Zusatz der Borsäure nicht verringert. Vielmehr wird die Viskosität der Masse sogar leicht erhöht, was im Hinblick auf die Standfestigkeit der fertigen Dübelmasse, beispielsweise bei Überkopfanwendungen, erwünscht ist.

Es ist aus der Tabelle ersichtlich, dass die erfindungsgemäßen Massen 2 und 3 im Vergleich zu der Vergleichsmasse 1 eine höhere Viskosität aufweisen bei einer verringerten Auspresskraft, was zweifellos als überraschend anzusehen ist. Die Tabelle lässt weiterhin erkennen, dass durch die erfindungsgemäße Zugabe der Borsäure zu der Harzkomponente (A) keine Beeinträchtigung der Festigkeitseigenschaften auftritt, sondern dass die erfindungsgemäßen Massen 2 und 3 eine erhöhte Scherfestigkeit im Vergleich zu der Vergleichsmasse aufweisen.

## Patentansprüche

1. Zweikomponenten-Mörtelmasse mit einer härtbaren Harzkomponente (A), die 30 bis 45 Gew.-% mindestens eines radikalisch polymerisierbaren Harzes, 30 bis 45 Gew.-% Füllstoffe, 15 bis 25 Gew.-% Zement und 1 bis 8 Gew.-% Verdickungsmittel enthält, und einer davon reaktionsinhibierend getrennt angeordneten Härterkomponente (B), die 1 bis 20 Gew.-% eines Peroxids, 10 bis 35 Gew.-% Wasser, 40 bis 80 Gew.-% Füllstoffe und 0,5 bis 5 Gew.-% Verdickungsmittel enthält, mit der Maßgabe, dass die Summe der Mengen der Bestandteile der Harzkomponente bzw. der Härterkomponente jeweils 100 Gew.-% beträgt, **dadurch gekennzeichnet, dass** die Harzkomponente (A) 0,01 bis 5 Gew.-% einer anorganischen und/oder organischen Säure und/oder deren Salze enthält.

2. Zweikomponenten-Mörtelmasse nach Anspruch 1, **dadurch gekennzeichnet, dass** die Harzkomponente (A) als anorganische Säure eine anorganische Lewissäure enthält.

3. Zweikomponenten-Mörtelmasse nach Anspruch 2, **dadurch gekennzeichnet, dass** die Harzkomponente (A) als anorganische Lewissäure eine Verbindung ausgewählt aus der Phosphorsäure (H₃PO₄), ein primäres Phosphat der Formel M^{I}H₂PO₄, ein sekundäres Phosphat der Formel M^{I}₂HPO₄, eine Oligophosphorsäure der Formel M^{I}ₙ₊₂PₙO₃ₙ₊₁bzw. M^{I}ₙH₂PₙO₃ₙ₊₁ worin n einen Wert von 2 bis 10 aufweist; eine Polyphosphorsäure der Formel M^{I}ₙ₊₂PₙO₃ₙ₊₁ bzw. M^{I}ₙH₂PₙO₃ₙ₊₁, worin n einen Wert von >10 aufweist, phosphorige Säure (H₃PO₃), ein primäres Phosphonat der Formel M^{I}H₂PO₃, ein sekundäres Phosphonat der Formel M^{I}₂HPO₃, worin M^{I} für ein einwertiges Metalläquivalent steht, Verbindungen der Formel Si(OH)₄, Al(OH)₃, H₃BO₃, H₃AsO₃, As₂O₃, H₃SbO₃, H₃SbO₄, Sb₂O₃, FeCl₃, CuCl₂ und ZnCl₂ und Mischungen davon umfassenden Gruppe enthält.

4. Zweikomponenten-Mörtelmasse nach Anspruch 1, **dadurch gekennzeichnet, dass** die Harzkomponente (A) als organische Säure eine Verbindung ausgewählt aus der aliphatische und aromatische Carbonsäuren, organische aliphatische und aromatische Phosphorsäuren, organische aliphatische und aromatische Phosphonsäuren, organische aliphatische und aromatische Sulfonsäuren und deren Salze umfassenden Gruppe enthält.

5. Zweikomponenten-Mörtelmasse nach Anspruch 4, **dadurch gekennzeichnet, dass** die Harzkomponente (A) als aliphatische und/oder aromatische Carbonsäure Ameisensäure, Essigsäure, Propionsäure, Oxalsäure, Malonsäure, Bernsteinsaure, Milchsäure, Brenztraubensäure, Zitronensäure, Fumarsäure, Maleinsäure, Benzoesäure, Salicylsäure, Phthalsäure, Terephthalsäure sowie deren Salze, als aliphatische Phosphonsäure Vinylphosphonsäure, sowie deren Salze und als aliphatische und aromatische Sulfonsäure Methansulfonsäure, Benzolsulfonsäure, p-Toluolsulfonsäure, Sulfanilsäure sowie deren Salze enthält.

6. Zweikomponenten-Mörtelmasse nach mindestens einem der Ansprüche 1 bis 5, **dadurch gekennzeichnet, dass** die Harzkomponente (A) die anorganische und/oder organische Säure und/oder deren Salze in einer Menge von 0,01 bis 2,0 Gew.-%, noch bevorzugter in einer Menge von 0,05 bis 1,0 Gew.-% enthält.

7. Zweikomponenten-Mörtelmasse nach mindestens einem der Ansprüche 1 bis 6, **dadurch gekennzeichnet, dass** die Harzkomponente (A) als radikalisch polymerisierbares Harz mindestens einen Vertreter derungesättigte Polyesterharze, Vinylesterharze und Vinylesterurethanharze umfassenden Gruppe enthält.

8. Zweikomponenten-Mörtelmasse nach Anspruch 7, **dadurch gekennzeichnet, dass** die Harzkomponente (A) als Vinylesterharz ein Additionsprodukt von Polyepoxiden mit ungesättigten Monocarbonsäuren, vorzugsweise ein Vinylesterharz auf Basis von Bisphenol A, ein Vinylesterharz aus einem Epoxy-Novolakharz und (Meth)acrylsäure oder ein Veresterungsprodukt von gegebenenfalls alkoxyliertem Bisphenol A mit (Meth)acrylsäure, als Vinylesterurethanharz ein Urethanmethacrylatharz oder ein Urethandimethacrylatharz, und als ungesättigtes Polyesterharz ein ungesättigtes Polyesterharz auf Basis von o- und/oder iso-Phthalsäure, Maleinsäure oder Fumarsäure als Dicarbonsäure und niedrigmolekularen aliphatischen Polyolen, vorzugsweise Diolen, enthält.

9. Zweikomponenten-Mörtelmasse nach mindestens einem der Ansprüche 1 bis 8, **dadurch gekennzeichnet, dass** die Harzkomponente (A) 0 bis 1 Gew.-% eines Polymerisationsinhibitors enthält.

10. Zweikomponenten-Mörtelmasse nach Anspruch 9, **dadurch gekennzeichnet, dass** die Harzkomponente (A) als Polymerisationsinhibitor einen phenolischen oder frei-radikalischen Polymerisationsinhibitor, vorzugsweise 4-Hydroxy-3,5-ditert.-butyltoluol, Butylbrenzcatechin, Hydrochinon und/oder 2,2,6,6-Tetramethylpiperidinyl-1-oxid oder dessen Derivate enthält.

11. Zweikomponenten-Mörtelmasse nach mindestens einem der Ansprüche 1 bis 10, **dadurch gekennzeichnet, dass** die Harzkomponente (A) 0,1 bis 30 Gew.-% eines Beschleunigers enthält.

12. Zweikomponenten-Mörtelmasse nach Anspruch 11, **dadurch gekennzeichnet, dass** die Harzkomponente (A) als Beschleuniger ein tertiäres aromatisches Amin, ein Toluidin oder Xylidin enthält.

13. Zweikomponenten-Mörtelmasse nach Anspruch 12, **dadurch gekennzeichnet, dass** die Harzkomponente (A) als Beschleuniger N,N-Dimethylanilin, N,N-Diethylanilin, N,N-Diemethyl-p-toluidin, N,N-Bis(hydroxyethyl)-p-toluidin, N,N-Bis(hydroxypropyl)-p-toluidin, N,N-Bis(hydroxyethyl)-m-toluidin und/oder N-Bis(2-hydroxyethyl)-xylidin enthält.

14. Zweikomponenten-Mörtelmasse nach mindestens einem der Ansprüche 1 bis 13, **dadurch gekennzeichnet, dass** die Härterkomponente (B) 1 bis 20 Gew.-% eines Peroxids, 10 bis 35 Gew.-% Wasser, 40 bis 80 Gew.-% Füllstoffe und 0,5 bis 5 Gew.-% Verdickungsmittel enthält.

15. Zweikomponenten-Mörtelmasse nach Anspruch 14, **dadurch gekennzeichnet, dass** die Härterkomponente (B) 30 bis 40 Gew.-% einer wäßrigen Dispersion von Benzoylperoxid, 40 bis 80 Gew.-% Quarzmehl, 15 bis 25 Gew.-% Aluminiumoxid und 0,1 bis 3 Gew.-% pyrogene Kieselsäure enthält.

16. Zweikomponenten-Mörtelmasse nach mindestens einem der Ansprüche 1 bis 14, **dadurch gekennzeichnet, dass** die Harzkomponente (A) und/oder die Härterkomponente (B) Quarz, pyrogene Kieselsäure, Glas, Silikate, Alumosilikate, Aluminiumoxid, Korund, Porzellan, Steingut, Schwerspat, Leichtspat, Talkum und/oder Kreide als Füllstoff enthalten.

17. Zweikomponenten-Mörtelmasse nach mindestens einem der Ansprüche 1 bis 15, **dadurch gekennzeichnet, dass** die Harzkomponente (A) und/oder die Härterkomponente (B) Schichtsilikate, wie Bentonit oder Smektit, pyrogene Kieselsäure und/oder organische Substanzen, wie Amidwachse, Harnstoffderivate oder Rizinusölderivate als Verdickungsmittel enthalten.

18. Zweikomponenten-Mörtelmasse nach mindestens einem der Ansprüche 1 bis 16, **dadurch gekennzeichnet, dass** die Härterkomponente (B) als Peroxid Dibenzoylperoxid, Methylethylketonperoxid, tert.-Butylperbenzoat, Cyclohexanonperoxid, Lauroylperoxid, Cumolhydroperoxid und/oder tert.-Butylperoxy-2-ethylhexanoat enthält.

19. Zweikomponenten-Mörtelmasse nach mindestens einem der Ansprüche 1 bis 17, **dadurch gekennzeichnet, dass** sie als Peroxid in einer Menge von 0,5 bis 10 Gew.-%, vorzugsweise von 3 bis 8 Gew.-%, bezogen auf das radikalisch polymerisierbare Harz, enthält.

20. Verwendung der Zweikomponenten-Mörtelmasse nach mindestens einem der vorhergehenden Ansprüche zur Befestigung von Verankerungsmitteln in Bohrlöchern in mineralischen Untergründen durch chemische Reaktion der Harzkomponente (A) mit der Härterkomponente (B).

## Claims

1. Two-component mortar mass with a hardenable resin component (A), which contains 30 to 45% by weight of at least one radically polymerisable resin, 30 to 45% by weight of filler, 15 to 25% by weight of cement and 1 to 8% by weight of thickener, and a hardener component (B) arranged separated from it in a way that inhibits reaction, which contains 1 to 20% by weight of a peroxide, 10 to 35% by weight of water, 40 to 80% by weight of filler and 0.5 to 5% by weight of thickener, with the condition that the total of the amounts of the resin component and of the hardener component parts amounts to 100% by weight, **characterised in that** the resin component (A) contains 0.01 to 5% by weight of an inorganic and/or organic acid and/or its salts.

2. Two-component mortar mass according to claim 1, **characterised in that** the resin component (A) contains an inorganic Lewis acid as inorganic acid.

3. Two-component mortar mass according to claim 2, **characterised in that** the resin component (A) contains a compound selected from phosphoric acid (H₃PO₄), a primary phosphate of the formula M^{I}H₂PO₄, a secondary phosphate of the formula M^{I}₂HPO₄, an oligophosphoric acid of the formula M^{I}ₙ₊₂PₙO₃ₙ₊₁ or M^{I}ₙH₂PₙO₃ₙ₊₁, in which n has a value from 2 to 10; a polyphosphoric acid of the formula M^{I}ₙ₊₂PₙO₃ₙ₊₁ or M^{I}ₙH₂PₙO₃ₙ₊₁, in which n has a value of >10, phosphoric acid (H₃PO₃), a primary phosphonate of the formula M^{I}H₂PO₃, a secondary phosphonate of the formula M^{I}₂HPO₃, in which M^{I} stands for a monovalent metal equivalent, compounds of the formula Si(OH)₄, Al(OH)₃, H₃BO₃, H₃AsO₃, As₂O₃, H₃SbO₃, H₃SbO₄, Sb₂O₃, FeCl₃, CuCl₂ and ZnCl₂ and groups comprising mixtures of them as inorganic Lewis acid.

4. Two-component mortar mass according to claim 1, **characterised in that** the resin component (A) contains a compound selected from aliphatic and aromatic carboxylic acids, organic aliphatic and aromatic phosphoric acids, organic aliphatic and aromatic phosphonic acids, organic aliphatic and aromatic sulfonic acids and groups comprising their salts as organic acid.

5. Two-component mortar mass according to claim 4, **characterised in that** the resin component (A) contains formic acid, acetic acid, propionic acid, oxalic acid, malonic acid, Bernstein acid, lactic acid, pyruvic acid, citric acid, fumaric acid, maleic acid, benzoic acid, salicylic acid, phthalic acid and terephthalic acid as well as their salts as aliphatic and/or aromatic carboxylic acid and vinylphosphonic acid as well as its salts as aliphatic phosphonic acid and methanesulfonic acid, benzenesulfonic acid, p-toluene sulfonic acid and sulfanilic acid as well as their salts as aliphatic and aromatic sulfonic acid.

6. Two-component mortar mass according to at least one of claims 1 to 5, **characterised in that** the resin component (A) contains the inorganic and/or organic acid and/or its salts in an amount from 0.01 to 2.0% by weight, even more preferably in an amount from 0.05 to 1.0% by weight.

7. Two-component mortar mass according to at least one of claims 1 to 6, **characterised in that** the resin component (A) contains at least one representative of the group comprising unsaturated polyester resins, vinyl ester resins and vinyl ester urethane resins as radically polymerisable resin.

8. Two-component mortar mass according to claim 7, **characterised in that** the resin component (A) contains an addition product from polyepoxides with unsaturated monocarboxylic acids, preferably a vinyl ester resin based on bisphenol A, a vinyl ester resin made of an epoxy-novolac resin and (meth)acrylic acid or an esterification product from alkoxylated bisphenol A with (meth)acrylic acid, if necessary, as vinyl ester resin, a urethane methacrylate resin or a urethane dimethacrylate resin as vinyl ester urethane resin and an unsaturated polyester resin based on o- and/or iso-phthalic acid, maleic acid or fumaric acid as dicarboxylic acid and low molecular aliphatic polyols, preferably diols, as unsaturated polyester resin.

9. Two-component mortar mass according to at least one of claims 1 to 8, **characterised in that** the resin component (A) contains 0 to 1% by weight of a polymerisation inhibitor.

10. Two-component mortar mass according to claim 9, **characterised in that** the resin component (A) contains a phenolic or free radical polymerisation inhibitor, preferably 4-hydroxy-3,5-ditert-butyltoluol, butylcatechol, hydroquinone and/or 2,2,6,6-tetramethylpiperidinyl-1-oxide or its derivatives as polymerisation inhibitor.

11. Two-component mortar mass according to at least one of claims 1 to 10, **characterised in that** the resin component (A) contains 0.1 to 30% by weight of an accelerator.

12. Two-component mortar mass according to claim 11, **characterised in that** the resin component (A) contains a tertiary aromatic amine, a toluidine or xylidine as accelerator.

13. Two-component mortar mass according to claim 12, **characterised in that** the resin component (A) contains N,N-dimethylaniline, N,N-diethylaniline, N,N-diemethyl-p-toluidine, N,N-bis(hydroxyethyl)-p-toluidine, N,N-bis(hydroxypropyl)-p-toluidine, N,N-bis(hydroxyethyl)-m-toluidine and/or N-bis(2-hydroxyethyl)-xylidine as accelerator.

14. Two-component mortar mass according to at least one of claims 1 to 13, **characterised in that** the resin component (B) contains 1 to 20% by weight of a peroxide, 10 to 35% by weight of water, 40 to 80% by weight of filler and 0.5 to 5% by weight of thickener.

15. Two-component mortar mass according to claim 14, **characterised in that** the hardener component (B) contains 30 to 40% by weight of an aqueous dispersion of benzoyl peroxide, 40 to 80% by weight of quartz flour, 15 to 25% by weight of aluminium oxide and 0.1 to 3% by weight of pyrogenic silica.

16. Two-component mortar mass according to at least one of claims 1 to 14, **characterised in that** the resin component (A) and/or the hardener component (B) contain quartz, pyrogenic silica, glass, silicates, aluminosilicates, aluminium oxide, corundum, porcelain, stoneware, heavy spar, light spar, talcum and/or chalk as filler.

17. Two-component mortar mass according to at least one of claims 1 to 15, **characterised in that** the resin component (A) and/or the hardener component (B) contain sheet silicates, such as bentonite or smectite, pyrogenic silica and/or organic substances, such as amide waxes, urea derivatives or castor oil derivatives, as thickener.

18. Two-component mortar mass according to at least one of claims 1 to 16, **characterised in that** the hardener component (B) contains dibenzoyl peroxide, methyl ethyl ketone peroxide, tert-butyl perbenzoate, cyclohexanone peroxide, lauroyl peroxide, cumolhydroperoxide and/or tert-butyl peroxy-2-ethylhexanoate as peroxide.

19. Two-component mortar mass according to at least one of claims 1 to 17, **characterised in that** it contains an amount from 0.5 to 10% by weight, preferably from 3 to 8% by weight, with regard to the radically polymerisable resin, as peroxide.

20. Use of the two-component mortar mass according to at least one of the previous claims for fastening anchoring means in holes in mineral substrates through chemical reaction of the resin component (A) with the hardener component (B).

## Revendications

1. Composition de mortier à deux composants ayant un composant résine durcissable (A) contenant de 30 à 45 % en poids d'au moins une résine polymérisable par voie radicalaire, 30 à 45 % en poids de charges, 15 à 25 % en poids de ciment et 1 à 8 % en poids d'agent épaississant, et un composant durcisseur (B) fourni séparément de manière à inhiber la réaction, contenant 1 à 20 % en poids d'un peroxyde, 10 à 35 % en poids d'eau, 40 à 80 % en poids de charges et 0,5 à 5 % en poids d'agent épaississant, à la condition que la somme des quantités des constituants du composant résine ou du composant durcisseur soit respectivement de 100 % en poids, **caractérisée en ce que** le composant résine (A) contient 0,01 à 5 % en poids d'un acide inorganique et/ou organique et/ou de ses sels.

2. Composition de mortier à deux composants selon la revendication 1, **caractérisée en ce que** le composant résine (A) contient un acide de Lewis inorganique en tant qu'acide inorganique.

3. Composition de mortier à deux composants selon la revendication 2, **caractérisée en ce que** le composant résine (A) contient, en tant qu'acide de Lewis inorganique, un composé choisi parmi le groupe comprenant l'acide phosphorique (H₃PO₄), un phosphate primaire de formule M^{I}H₂PO₄, un phosphate secondaire de formule M^{I}₂HPO₄, un acide oligophosphorique de formule M^{I}ₙ₊₂PₙO₃ₙ₊₁ ou M^{I}ₙH₂PₙO₃ₙ₊₁, où n a une valeur de 2 à 10, un acide poly-phosphorique de formule M^{I}ₙ₊₂PₙO₃ₙ₊₁ ou M^{I}ₙH₂PₙO₃ₙ₊₁, où n a une valeur > 10, un acide phosphoreux (H₃PO₃), un phosphonate primaire de formule M^{I}H₂PO₃, un phosphonate secondaire de formule M^{I}₂HPO₃, où M^{I} représente un équivalent métallique monovalent, des composés de formule Si(OH)₄, Al(OH)₃, H₃BO₃, H₃AsO₃, As₂O₃, H₃SbO₃, H₃SbO₄, Sb₂O₃, FeCl₃, CuCl₂ et ZnCl₂ et des mélanges de ceux-ci.

4. Composition de mortier à deux composants selon la revendication 1, **caractérisée en ce que** le composant résine (A) contient, en tant qu'acide organique, un composé choisi parmi le groupe comprenant les acides carboxyliques aliphatiques et aromatiques, les acides phosphoriques aliphatiques et aromatiques organiques, les acides phosphoniques aliphatiques et aromatiques organiques, les acides sulfoniques aliphatiques et aromatiques organiques, et de leurs sels.

5. Composition de mortier à deux composants selon la revendication 4, **caractérisée en ce que** le composant résine (A) contient, en tant qu'acide carboxylique aliphatique et/ou aromatique, l'acide formique, l'acide acétique, l'acide propionique, l'acide oxalique, l'acide malonique, l'acide succinique, l'acide lactique, l'acide pyruvique, l'acide citrique, l'acide fumarique, l'acide maléique, l'acide benzoïque, l'acide salicylique, l'acide phtahlique, l'acide térephtalique ainsi que leurs sels, en tant qu'acide phosphonique aliphatique, l'acide vinylphosphonique ainsi que ses sels, et en tant qu'acide sulfonique aliphatique et aromatique, l'acide méthylsulfonique, l'acide benzènesulfonique, l'acide paratoluènesulfonique, l'acide sulfanilique ainsi que leurs sels.

6. Composition de mortier à deux composants selon au moins une des revendications 1 à 5, **caractérisée en ce que** le composant résine (A) contient l'acide inorganique et/ou organique et/ou ses sels dans une quantité de 0,01 à 2,0 % en poids, de manière encore plus préférée dans une quantité de 0,05 à 1,0 % en poids.

7. Composition de mortier à deux composants selon au moins une des revendications 1 à 6, **caractérisée en ce que** le composant résine (A) contient, en tant que résine polymérisable par voie radicalaire, au moins un élément représentatif du groupe comprenant des résines de polyester, des résines de vinylester et des résines de vinylester-uréthanne insaturées.

8. Composition de mortier à deux composants selon la revendication 7, **caractérisée en ce que** le composant résine (A) contient, en tant que résine de vinylester, un produit d'addition de polyépoxydes avec des acides monocarboxyliques insaturés, de préférence une résine de vinylester basée sur un bisphénol A, une résine de vinylester d'une résine époxy-novolac et d'un acide (méth)acrylique ou un produit d'estérification d'un bisphénol A éventuellement alcoxylé avec de l'acide (méth)acrylique, en tant que résine de vinylester-uréthanne, une résine d'uréthane-méthacrylate ou une résine d'uréthane-diméthacrylate, et en tant que résine de polyester insaturée, une résine de polyester insaturée basée sur un acide o- et/ou iso-phtalique, un acide maléique ou un acide fumarique en tant qu'acide dicarboxylique et des polyols aliphatiques à faible poids moléculaire, de préférence des diols.

9. Composition de mortier à deux composants selon au moins une des revendications 1 à 8, **caractérisée en ce que** le composant résine (A) contient de 0 à 1 % en poids d'un inhibiteur de polymérisation.

10. Composition de mortier à deux composants selon la revendication 9, **caractérisée en ce que** le composant résine (A) contient, en tant qu'inhibiteur de polymérisation, un inhibiteur de polymérisation phénolique ou à radicaux libres, de préférence du 4-hydroxy-3,5-ditert.-butyltoluène, de la butylbrenzcatechine, de l'hydrochinone et/ou du 2,2,6,6-tétraméthylpipéridinyl-1-oxyde ou leurs dérivés.

11. Composition de mortier à deux composants selon au moins une des revendications 1 à 10, **caractérisée en ce que** le composant résine (A) contient 0,1 à 30 % en poids d'un accélérateur.

12. Composition de mortier à deux composants selon la revendication 11, **caractérisée en ce que** le composant résine (A) contient, en tant qu'accélérateur, une amine aromatique tertiaire, une toluidine ou une xylidine.

13. Composition de mortier à deux composants selon la revendication 12, **caractérisée en ce que** le composant résine (A) contient, en tant qu'accélérateur, de la N,N-diméthylaniline, de la N,N-diéthylaniline, de la N,N-diméthyl-p-toluidine, de la N,N-bis(hydroxyéthyl)-p-toluidine, de la N,N-bis(hydroxypropyl)-p-toluidine, de la N,N-bis(hydroxyéthyl)-m-toluidine et/ou de la N-bis(2-hydroxyéthyl)-xylidine.

14. Composition de mortier à deux composants selon au moins une des revendications 1 à 13, **caractérisée en ce que** le composant durcisseur (B) contient de 1 à 20 % en poids d'un peroxyde, 10 à 35 % en poids d'eau, 40 à 80 % en poids de charges et 0,5 à 5 % en poids d'agent épaississant.

15. Composition de mortier à deux composants selon la revendication 14, **caractérisée en ce que** le composé durcisseur (B) contient de 30 à 40 % en poids d'une dispersion aqueuse de peroxyde de benzoyle, 40 à 80 % en poids de poudre de quartz, 15 à 25 % en poids d'oxyde d'aluminium et 0,1 à 3 % en poids de silice pyrogénée.

16. Composition de mortier à deux composants selon au moins une des revendications 1 à 14, **caractérisée en ce que** le composant résine (A) et/ou le composant durcisseur (B) contiennent du quartz, de la silice pyrogénée, du verre, du silicate, de l'aluminosilicate, de l'oxyde d'aluminium, du corindon, de la porcelaine, de la faïence, du spath lourd, du spath léger, du talc, et/ou de la craie, en tant que charge.

17. Composition de mortier à deux composants selon au moins une des revendications 1 à 15, **caractérisée en ce que** le composant résine (A) et/ou le composant durcisseur (B) contiennent du silicate feuilleté, tel que de la bentonite ou de la smectite, de la silice pyrogénée et/ou des substances organiques, telles que de la cire amide, un dérivé d'urée ou un dérivé d'huile de ricin, en tant qu'agent épaississant.

18. Composition de mortier à deux composants selon au moins une des revendications 1 à 16, **caractérisée en ce que** le composant durcisseur (B) contient, en tant que peroxyde, du peroxyde de dibenzoyle, du peroxyde de méthyléthylcétone, du tert.-butylperbenzoate, du peroxyde de cyclohexane, du peroxyde de lauroyle, de l'hydroperoxyde de cumol et/ou du tert.-butylperoxy-2-éthylhexanoate.

19. Composition de mortier à deux composants selon au moins une des revendications 1 à 17, **caractérisée en ce qu'**elle contient un peroxyde en une quantité de 0,5 à 10 % en poids, de préférence de 3 à 8 % en poids, par rapport à la résine polymérisable par voie radicalaire.

20. Utilisation de la composition de mortier à deux composants selon au moins une des revendications précédentes pour fixer des moyens d'ancrage dans des trous percés dans des substrats minéraux par réaction chimique du composant résine (A) avec le composant durcisseur (B).
